(19) Europäisches Patentamt
European Patent Office
Office européen des brevets

(11) **EP 1 936 585 A1**

(12) **EUROPEAN PATENT APPLICATION**

(43) Date of publication:
**25.06.2008 Bulletin 2008/26**

(51) Int Cl.:
**G09B 29/00** *(2006.01)*

(21) Application number: **06127187.0**

(22) Date of filing: **23.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **NTT DoCoMo, Inc.**
**Tokyo (JP)**

(72) Inventors:
• **Luther, Marko**
  **82256, Fuerstenfeldbruck (DE)**
• **Souville, Bertrand**
  **84368, Moosburg an der Isar (DE)**

• **Wagner, Matthias**
  **80999, Muenchen (DE)**
• **Koolwaaij, Johan**
  **7534 HK, Enschede (NL)**

(74) Representative: **Betten & Resch**
**Patentanwälte**
**Theatinerstrasse 8**
**80333 München (DE)**

Remarks:
Amended claims in accordance with Rule 137(2) EPC.

(54) **Method and apparatus for automatically identifying regions of interest in a digital map**

(57)    A method for automatically identifying one or more regions of interest in a digital map, whereas a plurality of individual locations in said map have been tagged with descriptive tags by different users to semantically identify the meaning of these locations, said method comprising:

defining a search area within the digital map within which the search for regions of interest should be executed;

defining one or more type of tags to which the location tags which are to be found should belong;

applying a clustering algorithm to identify one or more clusters as regions of interest where those locations are grouped or concentrating which have been tagged by different users with tags of the type defined in said defining operation;

displaying the one or more regions of interest found by said clustering algorithm together with an indication of locations having tags of said predetermined type within said digital map.

Fig. 1

**Description**

**FIELD OF INVENTION**

The present invention relates to a method and an apparatus for automatically identifying one or more regions of interest in a digital map.

**BACKGROUND OF THE INVENTION**

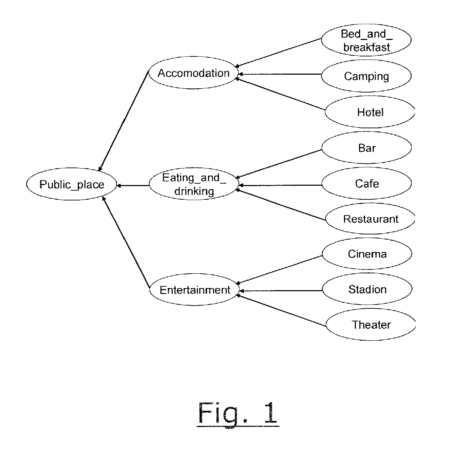

There exists a mobile application for mobile devices called "ContextWatcher" which gathers context information from local sensors and remote Context Providers and uses this information for various purposes (e.g., automatic generation of daily reports on activities of users in a Weblog). A description of the ContextWatcher can e.g. be found in S. Böhm, et al., «ContextWatcher - Connecting to Places, People and the World», The 5th International Semantic Web Conference, November 2006, and in Koolwaaij, et al., «Context Watcher - Sharing context information in everyday life», The 2nd IASTED International Conference on Web Technologies, Applications, and Services, July 2006.
Using the application ContextWatcher the users can also mark places located in their vicinity, like e.g. a restaurant, by pinpointing to the location of the restaurant on the screen of the mobile device, and then entering the restaurant's name. The thus generated may then be linked to place concepts, i.e. to a concept name which is part of a descriptive taxonomy and is qualitative description of the semantic meaning of the tag. Fig. 1 shows a fragment of an example of such a taxonomy of place concepts defined in the application ContextWatcher. One can recognise that the user may choose a concept name which matches best with the tagged location, such as in the present example the name "restaurant".

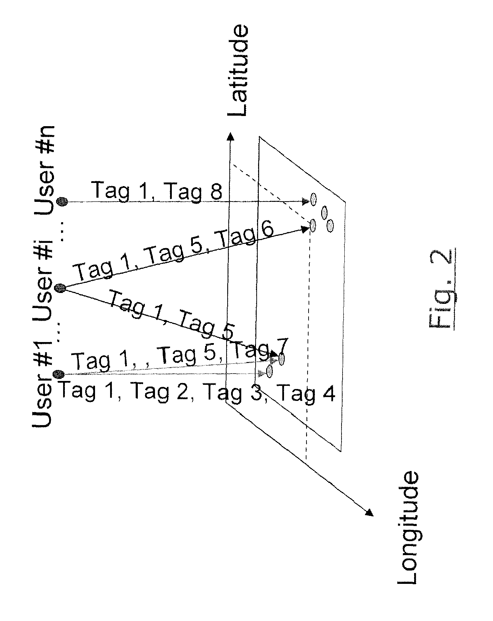

Collaborative tagging of places extends the previous features as follows: It is the process by which users associate descriptive words (i.e., tags) to places in a collaborative manner. Fig. 2 illustrates the concept of collaborative tagging of places. Basically, a tag links a place to a user whose geo-position is known or can be estimated. A place may be spread over an area of few meters (e.g., a sightseeing spot) to few kilometres (e.g., a park). This is indicated in Fig. 2 by the rectangle within which six locations are tagged by different users. In principle the same place may be tagged by several users located at different geo-positions or tagged several times by the same user at one unique location.

Tags are metadata that have a personal and a social dimension. On the one hand, tags have a personal dimension as users can freely tag objects (e.g., places, pictures, videos) using their own vocabulary. Tags are simple tools to sort, organise, and find objects that are meaningful to the users. On the other hand, tags have a social dimension as they can serve as indicators of interest that potentially can link a community of users that share the same tag vocabulary, e.g., plane spotters.

Existing mapping mashup solutions enable the visualisation of objects tagged at determined locations on satellite imagery or street maps. For instance, Flickr (see www.flickr.com) is a photo sharing system that offers a geo-tagging service which displays *geo-localised* pictures on a world map. *Geo-localised* pictures include in the list of tags the actual geo-position (longitude and latitude information) where the picture has been taken. Currently, the Flickr database includes more than 200000 *geo-localised* pictures and can be retrieved programmatically using the Flickr open APIs.

A tagging method is also disclosed in US-Patent Application 2005/0289469 wherein there is disclosed a method to store user-defined "context tag information" (e.g., date, proximity information, environmental information, etc.) associated with a geographic location. The context tag information or a subset of it may be accessed by other users.

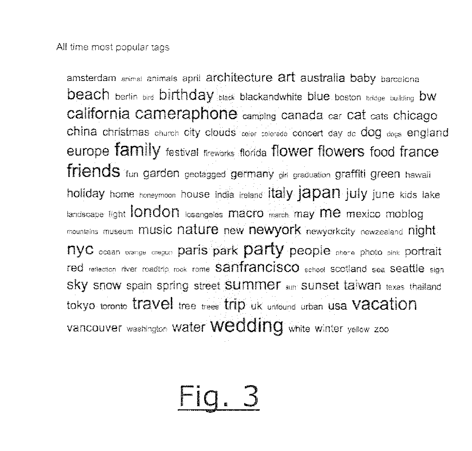

Many of the existing Web-based tagging systems (like e.g., Flickr, Del.icio.us (see http://del.icio.us), Upcoming.org (see http:llupcoming.org)) define tag clouds to facilitate the search of tags. Tag clouds provide usually a list of tags whose font size reflects its popularity among all the tags (see Fig. 3). Users can therefore find Web resources (e.g., photos for Flickr, Web pages for Del.icio.us, events for Upcoming.org, etc.) by selecting popular tags associated with them.

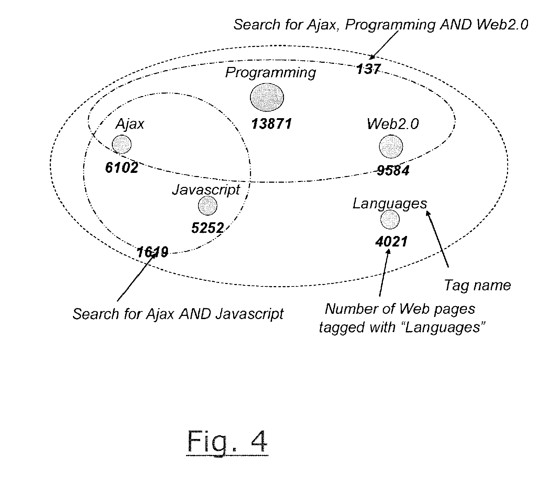

In G. Begelman, P. Keller, F. Smadja, «Automated Tag Clustering: Improving search and exploration in the tag space», Collaborative Web Tagging Workshop, WWW 2006, May 2006, there is proposed to apply a graph clustering algorithm to group tags into clusters. These clusters include similar or related tags, see e.g. http://rawsugar.com/similarTags. The search for relevant information is improved by selecting two or more tags which belong to the same cluster. Fig. 4 shows an example of a cluster defined by RawSugar. This cluster includes the tags "Ajax", "Programming", "Web2.0", "Javascript", "Languages". A search query for the tag "Ajax" returns 6102 Web pages whereas a search query for the tags "Ajax", "Programming" and "Web2.0" returns 137 Web pages.

Flickr has also introduced a tag clustering feature where popular tags have several associated clusters. For instance, for the tag Japan, 4 clusters have been identified:

Cluster 1: **tokyo, night, shinjuku,** train, shibuya, street, station, harajuku, asakusa, building
Cluster 2: **kyoto, temple, shrine,** garden, kamakura, nara, kinkakuji, gion, geisha, shinto
Cluster 3: **sakura, cherry, spring,** flower, blossom, cherryblossom, blossoms

Cluster 4: **food, japanese, fish,** sushi, market, girl, restaurant

However, in existing solutions, no distinction is made between the assignments of tags to a specific location (e.g., *// Gusto Restaurant*) or to a larger spatial area (e.g., *Italian Area*) whose boundaries might not be well determined. Moreover, even though marked places are useful to find again places already visited in the past (e.g., by selecting a tag from a personal tag cloud), existing solutions lack the ability to discover spatial areas in which places tagged in the same way by several users are grouped.

**SUMMARY OF THE INVENTION**

According to one embodiment there is provided a method for automatically identifying one or more regions of interest in a digital map, whereas a plurality of individual locations in said map have been tagged with descriptive tags by different users to semantically identify the meaning of these locations, said method comprising:

defining a search area within the digital map within which the search for regions of interest should be executed;
defining one or more type of tags to which the location tags which are to be found
should belong;
applying a clustering algorithm to identify one or more clusters as regions of interest where those locations are grouped or concentrating which have been tagged by different users with tags of the type defined in said defining operation;
displaying the one or more regions of interest found by said clustering algorithm together with an indication of locations having tags of said predetermined type within said digital map.

In this manner it becomes possible to identify spatial clusters where different users have - within a certain area which then shows up as region of interest - frequently applied tags of the same type to locations. In this manner extended locations of interest may be identified, such as areas which have a lot of sightseeing spots or regions of interest which extend over a certain area like parks, or other sightseeing spots.
According to one embodiment said clustering algorithm comprises:

moving a sliding window over the search area and counting the number of tags within the sliding window while it is at a certain location;
determining a region of interest based on the number count of the tags inside the sliding window while it moves over the search area.

This is a relatively simple approach of identifying a spatial cluster.
According to one embodiment said method comprises:

computing a density estimate function to estimate the tag density at the locations
inside the search area;
determining the boundaries of one or more regions of interest based on said density estimate function.

A density estimate function allows a more complex calculation of the "tag density" as a function of the location within the search area.
According to one embodiment said density estimate function comprises one or more of the following:

said density estimate function being a kernel density estimate making use of a
kernel function;
a weight function being applied to said density estimate function, whereas the weighing factors applied by said weight function comprises one or more of the following:

putting more emphasis on tags being created by users having a special
relationship with the present user;
putting more or less emphasis on the tags depending on the time when they where
created.

A Kernel function is an efficient way of limiting the "window" which influences the intensity calculation. A further way of considering further influences according to their desired weight consists in the application of a weighting function.
According to one embodiment said method further comprises:

determining the boundaries of one or more regions of interest based on the peaks and/or valleys in the computed density estimate.

The peaks and valleys offer a relatively simple way of determining the cluster boundaries. A peak may be chosen as the "center" of a cluster and the valley in the intensity distribution surrounding it forms the boundaries.
According to one embodiment said method further comprises:

displaying said one or more regions of interest in said search area by displaying their boundaries; and
indicating the tags within said region of interest by indicating the location of said tags through some graphic indication.

According to one embodiment said graphic indication comprises one or more of the following:

a graphic symbol representing the location of a tag;
a character string representing the location of a tag.

Graphic symbols like squares, circles or triangles are suitable for more or less exactly indicating the location of a tag. A character string, on the other hand, can convey some further information like information on the type of the tag.
According to one embodiment said graphic indication further comprises an indication of how many tags are located at the location corresponding to said graphic indication.
This enables the user to identify regions of particular interest due to the many tags located there.
According to one embodiment said indication of said number of tags comprises one or more of the following:

displaying graphic indications of different sizes to indicate different numbers of tags;
displaying numbers indicating the number of tags.

According to one embodiment the method further comprises:

displaying tags of different types by different graphic indications.

This is e.g. helpful if the search criterion was set such as to look for tags of different types, which may then be identified and distinguished by the user.
Displaying the region of interest together with the tags provides the user with the information he desires, namely the rough (Cluster) and exact (tags) locations of the places he is interested in.
According to one embodiment said symbol is one of a graphic symbol or an alphanumeric character string.
According to one embodiment said method further comprises:

fitting the resulting region of interest determined based on said clustering algorithm by a predefined geometric shape like a circle, a rectangle or a polygon.

According to one embodiment said tags belong to one or more of categories or types forming a taxonomy of possible tags; and said tags have been assigned to said locations by different users at different locations.
According to one embodiment said method further comprises:

determining the geographic location of a user, and
notifying the user if he enters a region of interest determined by a method of one of
the preceding claims.

The automatic notification of the user is helpful because he does not have to continuously watch the map and still will be informed if he enters a new or the desired region of interest.
According to one embodiment said method further comprises:

providing a database where the locations which have been tagged by users are
stored together with their corresponding tags;
providing an interface to access said database in order to enable said search for
regions of interest; and
providing an interface to enable a user to add further tags to said database.

This enables the usage and continuous update of the location tag database.

According to one embodiment there is provided an apparatus for automatically identifying one or more regions of interest in a digital map, whereas a plurality of individual locations in said map have been tagged with descriptive tags by different users to semantically identify the meaning of these locations, said apparatus comprising:

> defining a search area within the digital map within which the search for regions of
> interest should be executed;
> defining one or more type of tags to which the location tags which are to be found
> should belong;
> applying a clustering algorithm to identify one or more clusters as regions of interest where those locations are
> grouped or concentrating which have been tagged by different users with tags of the type defined in said defining
> operation;
> displaying the one or more regions of interest found by said clustering algorithm together with an indication of
> locations having tags of said predetermined type within said digital map.

According to one embodiment said apparatus further comprises:

> means for executing a method according to any one of the methods of the
> embodiments of the invention.

According to one embodiment there is provided a computer program comprising program code which when being executed on a computer causes said computer to carry out a method according to one of the embodiments of the invention.

## DESCRIPTION OF THE DRAWINGS

> Fig. 1 shows an example of a taxonomy which may be used for tagging.
> Fig. 2 shows an example how places may be tagged by users.
> Fig. 3 shows the visualisation of tag clouds.
> Fig. 4 shows an example of a tag cluster.
> Fig. 5 schematically illustrates the operation of an embodiment of the invention.
> Fig. 6 schematically illustrates possible shapes for spatial cluster boundaries.
> Fig. 7 shows a flowchart illustrating an embodiment of the invention.
> Fig. 8 illustrates possible shapes of clusters according to an embodiment of the invention.
> Fig. 9 shows a display of the tag density calculated.
> Figs. 10 to 12 illustrate possible displays of the result of the cluster search.

## DETAILED DESCRIPTION

In the following embodiments of the invention will be described by referring to the accompanying drawings.
In one embodiment of the invention there is made a determination of one or more spatial areas within a digital map in which tags of a certain kind (for example tags of the type "restaurant" or nightlife" or "downtown" or the like) are accumulated, e.g. by being more abundant than the average abundance of these tags in the overall area. For that purpose at first it is determined which type of tag should be searched, e.g. by identifying the tag through its concept name in a taxonomy, like "restaurant" or "bar" or "stadium" or anything alike which is a suitable categorisation of a tag. This definition can be made by the user through an interface which may e.g. offer him to browse through a given taxonomy to select the category of tag he is interested in. There may further be a determination of the (sub-)area of the digital map within which the search should be conducted. This is useful if the map covers e.g. the whole country but the user is only interested e.g. in one city which the is selected as sub-area.
It is now assumed that the user wishes to identify those geographic area or areas in the sub-area of the map for which the tags belonging to the category defined by him are grouped because other users (and possibly also he himself) have tagged locations in this area with tags belonging to the defined category.
In other words, if the tag type selected by the user is "bar" the embodiment of the invention is then looking for an area where tags of the type "bar" are concentrating. One can assume that an area where many bars are located there are many tags of this type because in the past users have tagged places in this area with the tag "bar". It will be understood that the tags may not only result from tagging by other users, but also predefined tags which have been assigned during set-up of the system (e.g. tags taken from existing maps identifying certain locations as "bar") may be included in the determination of the area of interest.

The embodiment then searches for an area where those tags are accumulating or grouping in the following manner.

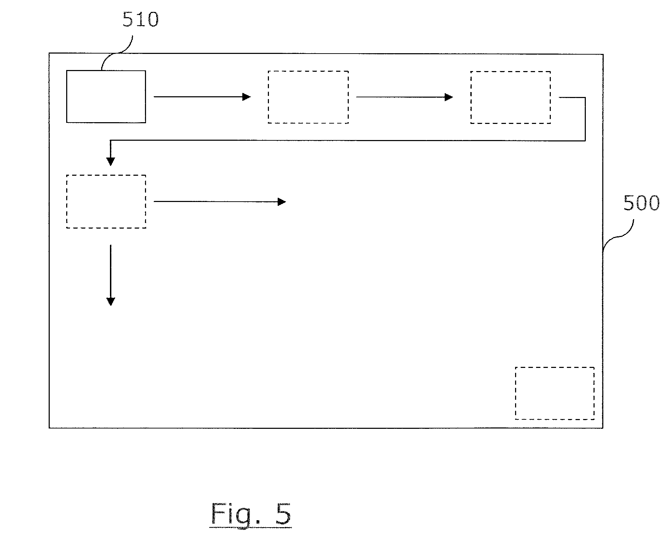

Referring to Fig. 5, according to one embodiment there is an area 500 (like e.g. the area of a certain city which has been selected from a map as sub-area of interest) within which one or more further sub-areas should be identified as those regions of interest within which tags of a certain type (like here the "bar" tag) are accumulating or "grouping".

In other words, the problem to be solved may be regarded as identifying one or more "clusters" where the tags are accumulating. One method of achieving this goal will now be described. For that purpose there is made use of a predefined window 510 which is a sub-area of area 500 and which is used as a sliding window to move over the whole area 500 in incremental steps as shown in Fig. 5. At each location of the sliding window 510 the number of tags falling within the present window is counted, and then the sliding window moves forward by a predefined incremental step to the next location. In this manner the whole area 500 will be covered, and for each location of the sliding window there is determined a number count of the occurrences of the tag "bar" within the present location of the sliding window.

By looking for the maximum of the number count the location of the sliding window may be determined at which it contained the largest number of tags of the type "bar". This corresponds then to a searched "region of interest" where the user may assume that the "bar density" is high, and where he may expect to be successful if he looks for an area having a variety of bars to offer.

The result may then be displayed to the user by showing on the display of the mobile device the overall area 500 and highlighted therein the sub-area 510 at the location with the highest tag number count.

According to one embodiment not only the sliding window with the highest number count is displayed, but also those locations where the number count ranks second or third. To arrive at a meaningful display, however, only locations of the sliding window which do not overlap should be displayed to the user to avoid confusion.

According to one embodiment the user may determine through an interface the size and shape of the sliding window, possibly also of the incremental steps. Such a determination should then be made before the search algorithm is executed.

According to one embodiment a slightly more complex judgement of the region of interest may be made. In this case there are chosen more than one locations of the sliding window for the region of interest, e.g. those with the three or five (or any other number) highest tag number counts. If these windows overlap they may be joined together so that a shape of concatenated rectangles results as the region of interest. Another way would be to determine the average tag density (number of tags per area unit), and to chose those sliding window locations as regions of interest where the tag density exceeds the average number by a certain amount.

Independent of the way of determining the regions of interest they may then be displayed for the user, preferably on the map, together with an indication of the tags located in the determined region or regions of interest.

In the following there will be described another embodiment for determining one or more regions of interest. This embodiment aims at identifying and at delimiting clusters in the 2-dimensional space which group places tagged in the same way by several users. It uses a somewhat more complex clustering algorithm to identify spatial clusters of tags.

Spatial clusters are defined as a set of connected places tagged by a single tag (or a tag of the same type). A cluster has one cluster centre and a set of cluster boundaries. Some of the tagged places may not belong to any cluster (i.e. outliers). In this embodiment a weighted density estimate function is computed to determine cluster centres and cluster boundaries. Various weighting factors may be added to the density function to put more emphasis on some of the tagged places rather than others. For instance, more emphasis can be put to tags created by users having special relationships (e.g., a buddy relationship with the present user) or to tags created during a certain time interval (e.g., over the last 6 hours).

The present embodiment makes use of a kernel density estimation method which uses a kernel function. The kernel density estimation method aims at detecting spatial clusters within a geographical region R. This method assumes that n events ($e_1$, $e_2$, ..., $e_n$) are observed at determined locations. This method applies a kernel function $K_\beta(e)$ used to estimate the intensity of occurrence of events $I_\beta(e)$ within R. One example of such a use of a kernel function is:

$$I_\beta(e) = \sum_{i=1}^{n} \frac{1}{\beta} K_\beta(e - e_i)$$

where $\beta$ is the bandwidth and e located within R.

A general introduction to such kinds of kernel function can be found e.g. in B. W. Silverman, «Density Estimation for Statistics and Data Analysis», Chapman & Hall / CRC, May 1986.

In the present example ($e$-$ei$) is the distance between location $e$ for which the intensity I is to be calculated, and $e_i$ is the location $e_i$ of an event, whereas in the present example an event corresponds to a tag of the desired type

occurring at location $e_i$. The kernel function values of the distance differences $K_\beta(e- e_i)$ are summed up for all events (=tags of the desired type) from i=1 to n, with the bandwidth β used as a smoothing factor.

In this manner for each location e in the examined area an intensity value is obtained. Based on this intensity map one or more regions of interest may be determined by identifying the boundaries of one or more clusters. A cluster corresponds to an area where the tags of the desired type are accumulated. The clusters may be identified (e.g. by determining their shape and their boundaries) and may then further be visualised, e.g. by displaying their boundaries on a map.

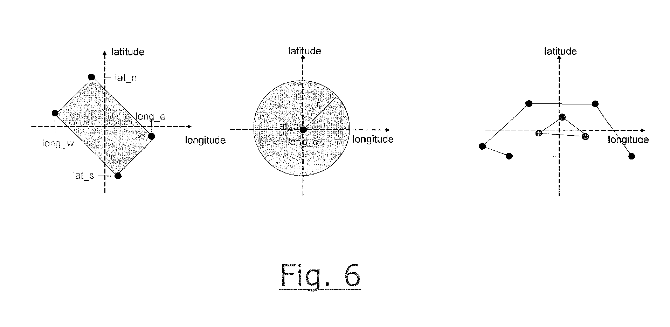

In one embodiment one may distinguish three possible shapes for spatial cluster boundaries as illustrated in Fig. 6:

- The shape is rectangular: A rectangle is defined by five parameters [north = lat_n, east = long_e, west = long_w, south = lat_s, rotation = 45˚].
- The shape is circular: A circle is defined by three parameters [longitude = long_c, latitude = lat_c, radius = r].
- The shape is polygonal: A polygon is defined by outer and inner boundaries (inner and outer dots in Fig. 6).

By using a fitting algorithm the cluster shape (which may be predefined or chosen by the user) is fitted to the intensity map, e.g. in such a manner that the integrated intensity within the cluster lies beyond a certain threshold. Another approach could be to chose those locations of the intensity map as boundaries where the intensity still lies beyond a certain percentage of the peak intensity. For the thus selected locations there may then be mad a fitting by using the selected boundary shape such as rectangle, circle or polygon. The resulting cluster may then be displayed on a map, whereas in this map then the tags lying within the cluster boundaries may be displayed at their specific locations.

With such an approach of collaborative tagging many advantages can be obtained.

E.g. people like to share their experiences. The proposed solution provides an infrastructure that allows them to do so in an easy manner. A user may make use of tags which have been defined by other users or a whole user community. Additionally, it generates overviews that provide a fresh look on existing data, causing maybe a change in behaviour, or a proud feeling because they contributed to these results.

Tags might not only be meant to describe geographic places, but also what people do there (behaviour) and how they perceive it (experience). Hence a region derived from these types of tags might in fact be an experience or behaviour region, e.g., this is the area in the city where people mostly drink beer versus the area where they mostly drink wine or coffee. There may be identified areas tagged with behavioural labels like "culture" or "biking" or "skiing", and all such labels may belong to the tag category or type "behaviour".

Once the geographic regions of interest have been identified, these regions can be visualised, both in a desktop client (like Google Earth) and/or in mobile clients (like the ContextWatcher).

According to one embodiment people can be alerted on entry of a new region, e.g. if they enter a region which belongs to a certain cluster their mobile phone may notify them and may display the cluster and its type (=the type of the tag) to them. This alert mode may be combined with some filtering, like an alert being issued only if the newly entered cluster is of the type "behaviour" or of the type "culture" or of the type "sightseeing".

According to another embodiment list of traversed regions (=the clusters through which the user has passed) may be used to characterise a trip.

According to one embodiment there system may be used by local governments or tourism offices to get an overview of what people in their city are doing and experiencing, e.g. by checking where there are clusters of certain types of tags (e.g. "sightseeing" clusters). According to one embodiment the system may also be used to issue geo-based polls, like e.g. in case of a "safety week" declared by a municipal government. In such a week users may be asked to "press 5" on your mobile device to report an unsafe spot in our city, tag it and submit it. The category of the tag in this case would be "unsafe location". Next week the Top5 of unsafe places (the regions where unsafe spots are clustering) will be published, the week after the Top5 may be made safer by regulations and actions of the municipality.

In the described manner there can be executed a bottom up generation of a geographic information system about areas and regions.

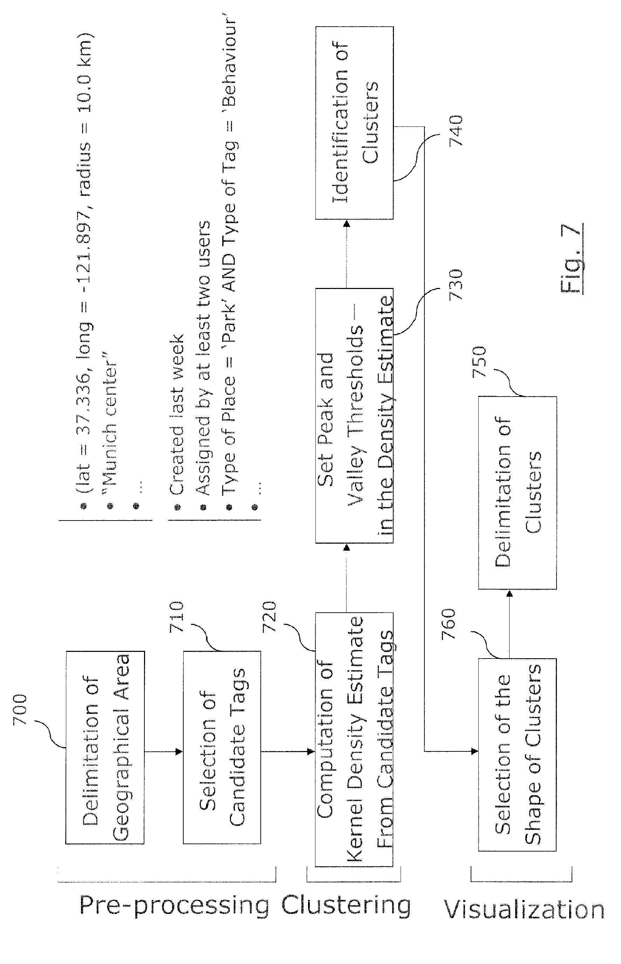

In the following a further embodiment of the invention will be described by referring to Fig. 7. Figure 7 shows a flow chart that describes the sequence of steps required to identify and delimit spatial clusters: a first step of Pre-processing, a second step of clustering and a third step of visualization.

At first the preprocessing will be described. The aim of this first step is to filter out irrelevant tags (e.g., outside the area of interest, illustrated as step 700 in Fig. 7) and to define candidate tags that will be considered during the clustering process (illustrated as step 710 in Fig. 7).

To filter out irrelevant tags there may be applied one or more spatial filters. For instance, the area of interest could be a circle of adjustable radius and centred at the current geo-position of the user. Another possibility would be to let the users select spatial objects (e.g., District: "Munich central area", as shown in Fig. 7) stored in a spatial database or in a geographic information system GIS. The thus selected area will then be the area within which the search for clusters of tags will be performed to identify "sub-areas" of specific interest where the searched tag or tags are accumulating.

The next pre-processing step 710 involves the application of one or more tag selection criteria: In this step the user may define the type of tag or tags he is interested in. For that purpose the user may impose temporal constraints (e.g., over the last week), constraints on the user space (e.g., include/exclude buddies of buddies, a buddy being a person whom the user knows and with whom he has a special relationship) or on the tag space (e.g., include popular tags whose type is 'Behaviour' and the type of associated place is 'Public_Place', as illustrated in Fig. 7).

With such a limitation of the "tag space" the user defines the semantic limitation of the tags within which the search to be performed by selecting a subset of tags which should be considered in the search.

Just as an illustrating example, table 1 provides the list of pictures tagged by "Downtown" which have been retrieved from the Flickr public database.

**Table 1: Geotagged pictures in the photo sharing system Flickr**

| User identifier | Longitude | Latitude | Uploaded Date |
|---|---|---|---|
| 37912374286@N01 | -118.247287 | 34.050962 | 2006-06-30 |
| 37912374286@N01 | -118.248848 | 34.055402 | 2006-06-30 |
| 15426458@N00 | -118.245045 | 34.055171 | 2006-06-21 |
| 15426458@N00 | -118.247116 | 34.056535 | 2006-06-21 |
| 15426458@N00 | -118.246536 | 34.056179 | 2006-06-21 |
| 15426458@N00 | -118.245858 | 34.056302 | 2006-06-21 |
| 15426458@N00 | -118.247067 | 34.056373 | 2006-06-21 |
| 15426458@N00 | -118.244551 | 34.056366 | 2006-06-21 |
| 15426458@N00 | -118.246386 | 34.055788 | 2006-06-21 |
| 15426458@N00 | -118.246386 | 34.055717 | 2006-06-21 |
| 15426458@N00 | -118.247148 | 34.056144 | 2006-06-21 |
| 50008741@N00 | -118.211045 | 34.015086 | 2006-05-24 |
| 50008741@N00 | -118.211045 | 34.01505 | 2006-05-24 |
| 50008741 @N00 | -118.219414 | 34.000251 | 2006-05-24 |
| 50008741 @N00 | -118.250098 | 34.054864 | 2005-10-14 |
| 51035602203@N01 | -118.249347 | 34.055257 | 2005-03-18 |

Table 1 contains geotagged pictures taken at locations within a circle centred at [longitude = -118.2472, latitude = 34.05375] of radius 10 km (Area of interest: Los Angeles)

With the thus defined geographic region of interest and the also defined semantic subset of tags the user has defined a geographic and semantic space within which a search for clusters is to be executed in order t identify "sub-areas" as regions of particular interest due to the clustering of tags in these regions.

It is assumed in the following that p places $tp_i$ have been tagged by the same tag (or tag of the same type) within the area of interest. In order to identify spatial clusters, in one embodiment a weighted density estimate function is then computed at N locations:

$$I_\beta(l, t, user) = \sum_{i=1}^{p} w_i(t, user).K_\beta(l - tp_i)$$

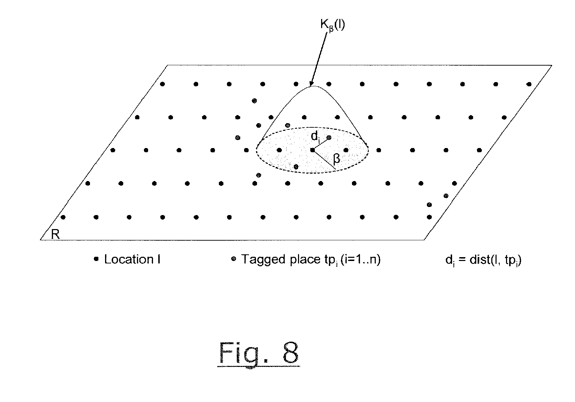

Figure 8 shows an example of how to determine $I_\beta$ *(l, t, user)*. Here *l* is the location where the intensity is to be determined, t is the time, and *user* is the user who has generated the tag contributing to the calculation. E.g. tags may be weighed differently depending on the user who has generated them. The kernel function $K_\beta(l)$ used in one embodiment is the quartic kernel and $I_\beta$ *(l, t, user)* is the sum of the contributions by the tagged places $tp_i$ whose distance $d_i = dist(l, tp_i)$ is below the bandwidth β. Therefore the intensity calculation may be written as:

$$I_\beta(l,t,user) = \sum_{di \le \beta} f(t).g(user).(1 - \frac{d_i^{\,2}}{\beta^2})^2$$

The function f(t) may be an exponential function (i.e. f(t) = exp(-μ(t0 - t)) where t0 - t is the time difference between the current time t0 and the time t when the tag has been created) to put more emphasis on recent tags. The function g(user) may take a discrete number of values depending on the type of user considered (e.g., g(user = myself) = 1; g(user = local municipality) = 0.8; g(user = my buddy) = 0.5, etc). It should be understood that this example is provided for illustrative purpose only, and the specific parameters may be chosen differently. Also the kernel function used may be a different kernel function, such as e.g. a Gaussian kernel.

Table 2 shows the values of the density estimate function for the data defined in Table 1 at N = 65 locations.

**Table 2: Values of the density estimate function**

| | | | | | | | | |
|---|---|---|---|---|---|---|---|---|
| | 0.796215: | 2.56398 | 2.611612 | 0.893556 | | | | |
| 0.550842775 | 4.643384 | 8.323423 | 8.39204 | 4.803969 | 0.667596 | | | |
| 1.666636691 | 7.446179 | 11.97299 | 12.0475 | 7.624443 | 1.812825 | | | |
| 1.335192982 | 6.683759 | 10.99081 | 11.05612 | 6.834421 | 1.435346 | | | |
| 0.181148401 | 2.989313 | 6.009737 | 6.050756 | 3.067076 | 0.16656 | | | |
| | 0.135145 | 0.81739 | 0.81901 | 0.178248 | 0.476785 | 0.694173 | 0.4778 | |
| | | | | 0.493227 | 1.316321 | 1.631946 | 1.263176 | 0.486247 |
| | | | | 1.012926 | 2.088866 | 2.390429 | 1.749063 | 0.714936 |
| | | | 0.211357 | 1.141388 | 2.171152 | 2.402507 | 1.666868 | 0.525226 |
| | | | 0.260733 | 0.806903 | 1.491376 | 1.596361 | 0.953238 | 0.123111 |
| | | | 0.129883 | 0.491272 | 0.705754 | 0.628189 | 0.264428 | |
| | | | | 0.122224 | 0.238871 | 0.18188 | | |

EP 1 936 585 A1

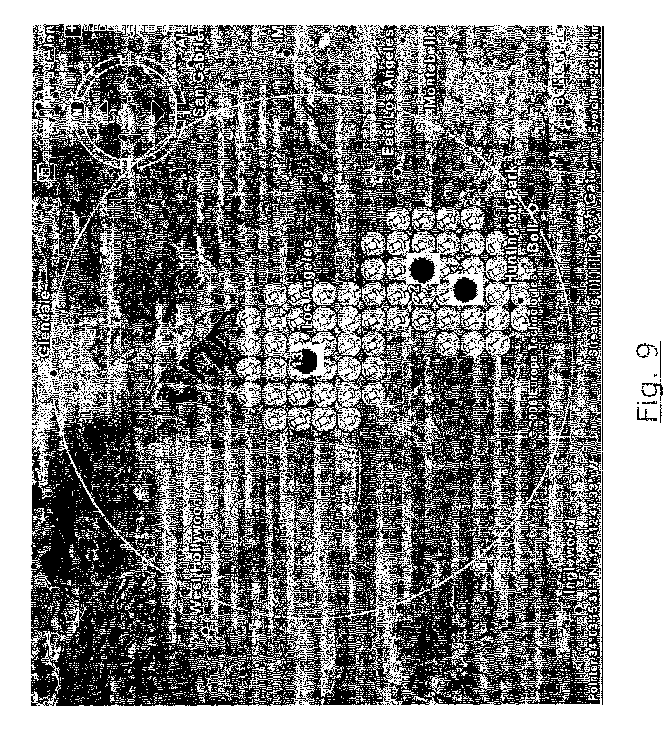

Figure 9 shows a visualisation of the result of the intensity calculation, typically this visualisation will not be displayed to the user. The pins show the locations where the intensity density function is calculated. The circles (black circles in white squares) show the locations where at least one user has put a tag. The numbers in one embodiment may be identifiers for tag, in another embodiment they correspond to the number of individual tags at the shown location. If these symbols correspond to the indication of locations where more than one tags are located, they are displayed at locations where within a predefined area (e.g. the grid size of the map) there are more than one tags located. One can see that there are two regions within the cluster where there are places with more than one tags, one in the center of Los Angeles (with 13 tags located there as indicated by the number 13) and one at East Los Angeles (having two tags located there as indicated by the number 2). The third symbol accompanied by the number 1 indicates a location where only one tag is located. However, as mentioned, although this visualisation of the intensity map may be displayed, in one embodiment it is actually not displayed to the user.

Based on the resulting intensity map spatial clusters are then identified by locating the peaks and valleys in the density estimate. Peak and valley thresholds can be set beforehand to restrict the number of cluster centres (i.e. peaks in the density estimate) and to detect outliers which by definition do not belong to any cluster.

As mentioned, different cluster boundary shapes may be chosen, rectangular, circular or polygonial. For certain applications, the accuracy of clusters is one of the critical parameters (e.g. in case of guiding users towards mobile services based on tagged areas). For other applications (e.g. detecting tagged areas over a short time period), the computational time to delimit clusters may become the critical parameter. By approximating cluster boundaries as rectangles or circles, the process of delimiting clusters can be speeded up by identifying peaks in the density estimate and by expanding the determination of the density estimate to neighbour locations until a valley of the density estimate is detected.

In table 3 below is given a cluster boundary shape in case of a rectangular cluster.

Table 3: Values of the density estimate function (Shape is rectangular)

| 0.796215 | 2.56398 | 2.611612 | 0.893556 | 9.80E-05 |
| --- | --- | --- | --- | --- |
| 4.643384 | 8.323423 | 8.39204 | 4.803969 | 0.667596 |
| 7.446179 | 11.97299 | *12.0475* | 7.624443 | 1.812825 |
| 6.683759 | 10.99081 | 11.05612 | 6.834421 | 1.435346 |
| 2.989313 | 6.009737 | 6.050756 | 3.067076 | 0.16656 |

The found clusters may be visualised to the user such that he can easily identify the searched regions of interest in the searched area. Some examples of visualisations are explained below.

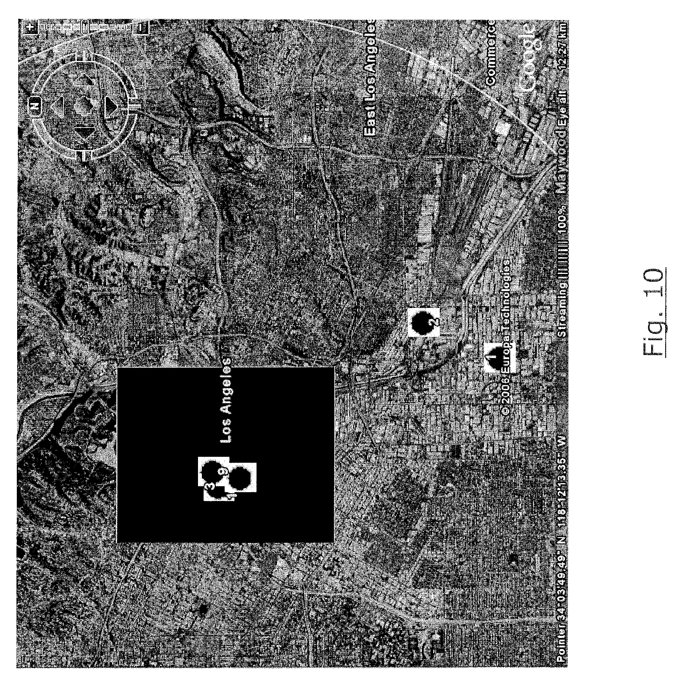

Another way of displaying the result of the clustering search is shown in Fig. 10. One can recognise the rectangular shape of the cluster. Within the cluster one can see that black circles on a white background are displayed at those locations where more than one tag has been found. The numbers next to the symbols indicate the number of tags at the location highlighted by the symbol.

In this embodiment shown in Fig. 10 not only the tags inside the cluster are displayed, but also some outliers located outside the cluster more towards the south. One can recognise that there is one location where two outlier tags are located, and one location where there is only one, as indicated by the numbers next to the symbols (black circles on white squares).

According to one embodiment outliers are only displayed if their number exceeds a certain threshold, e.g. single outliers are not displayed but only such outliers where there are more than one tag located.

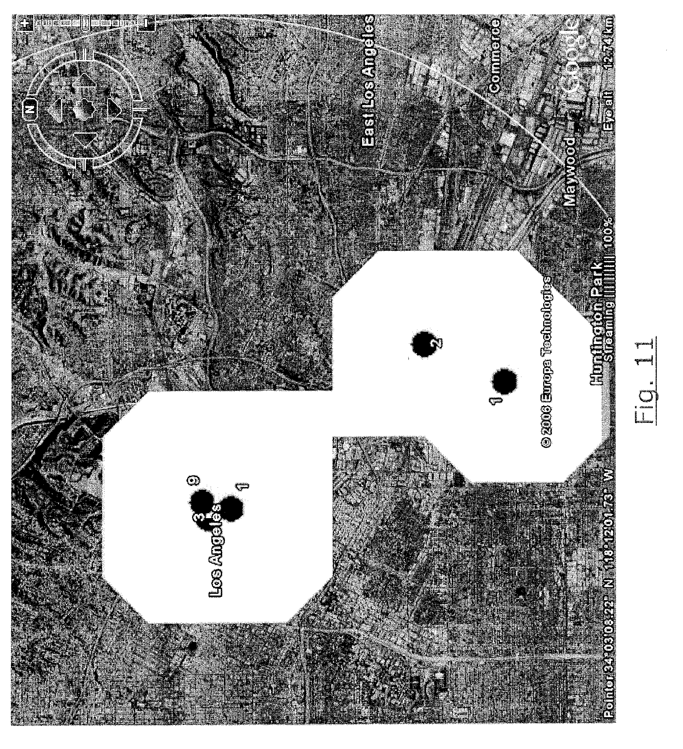

Fig. 11 shows still another way of displaying the result of the cluster detection. The shape of the cluster in Fig. 11 is polygonial, and one can see that there are three areas in the cluster where there are more than one tag at a single location (as defined e.g. by a grid with one grid cell defining a "location"). One area is in the center of Los Angeles, and the other two are in East Los Angeles. The other two locations just have a single tag, as indicated by the number 1.

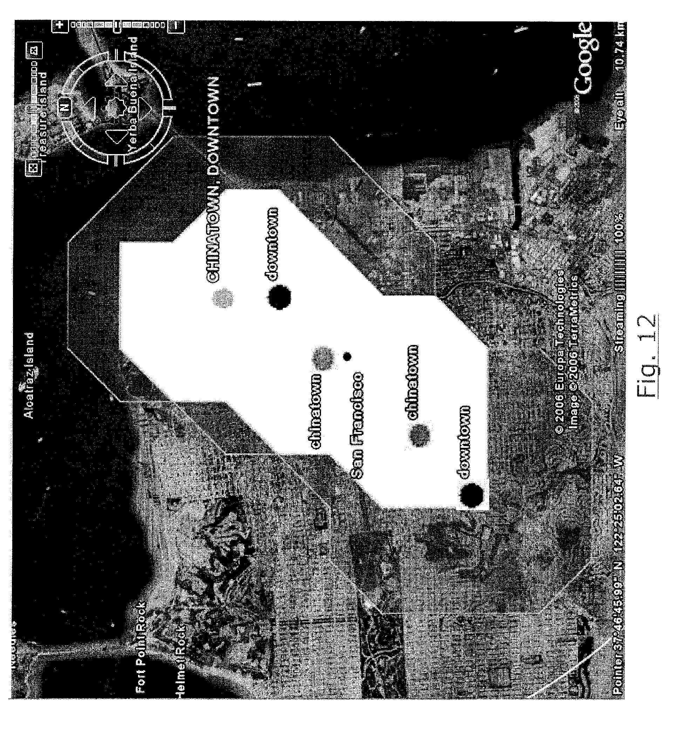

Fig. 12 shows a further way of displaying the result of the cluster detection. Fig. 12 is an example where clusters for two tags have been searched, one being the tag "downtown" and the other one being the tag "chinatown". This results in two clusters, and the two clusters actually are overlapping and a list of the tags are displayed in overlapping areas (e.g. "downtown, chinatown" in the center of San Francisco). The tags of the different type may be represented by different symbols, e.g. the location of the downtown tags may be represented by circles while the location of the chinatown tags may be represented by squares. However, as can be seen in Fig. 12, the location may be identified by the same tag (circles in Fig. 12), as long as there is some indication which enables the user to distinguish between the different tags. In the visualisation shown in Fig. 12 this is done by the character string ("downtown" or "chinatown") next to the tag, as can be seen in Fig. 12. Alternatively or additionally the different tag types may be displayed by different colours so that the user can distinguish between them.

In one embodiment the visualisation further contains an indication of the number of tags at a certain location. This can be done by indicating the number next to the symbol, as e.g. shown by the numbers in Figures 10 and 11, or it may be done by displaying the tag location symbols in different sizes depending on the number of tags located there. Additionally or alternatively the character strings also may be displayed in font sizes depending on the number of tags.

In the embodiment shown in Fig. 12 a user may display in the foreground one cluster by e.g. clicking on the tag associated to that cluster.

In all of the examples shown in Figures 10 to 12 the clusters are displayed together with their boundaries. This has the effect that a user can - independent of individual tags - check whether he is in an "area of interest" or not, and if he is, there is a relatively high likelihood that he will come across places that match with the category of the search tag like "bar" or "sightseeing".

There are still other possibilities of displaying the result of the cluster search. For example it would be possible to indicate the location of tags by some character strings, and to the number of tags at such a location by the size of the font of the character string.

According to one embodiment the user may cause the device to display the details of the tags, e.g. in form of a list with detailed information, by clicking on a symbol in the map of one of Figures 10 to 12. Alternatively or additionally such a click may cause a zooming in to the location where multiple tags are located so that the individual tags may be more easily identified than on a large scale map as shown in Figures 10 to 12.

In the foregoing there have been described embodiments for enabling users equipped with a mobile terminal to associate descriptive words (i.e., tags) to places located in the users' vicinity and for determining, defining and visualising spatial areas which comprise places tagged in the same way by the users.

It will be readily apparent to the skilled person that the methods, the elements, units and apparatuses described in connection with embodiments of the invention may be implemented in hardware, in software, or as a combination of both. In particular it will be appreciated that the embodiments of the invention and the elements of modules described in connection therewith may be implemented by a computer program or computer programs running on a computer or being executed by a microprocessor. Any apparatus implementing the invention may in particular take the form of a mobile device such as a mobile phone, a smartphone, a PDA, or anything alike.

**Claims**

1. A method for automatically identifying one or more regions of interest in a digital map, whereas a plurality of individual locations in said map have been tagged with descriptive tags by different users to semantically identify the meaning of these locations, said method comprising:

   defining a search area within the digital map within which the search for regions of interest should be executed;
   defining one or more type of tags to which the location tags which are to be found should belong;
   applying a clustering algorithm to identify one or more clusters as regions of interest where those locations are grouped or concentrating which have been tagged by different users with tags of the type defined in said defining operation;
   displaying the one or more regions of interest found by said clustering algorithm together with an indication of locations having tags of said predetermined type within said digital map.

2. The method of claim 1, wherein said clustering algorithm comprises:

   moving a sliding window over the search area and counting the number of tags within the sliding window while it is at a certain location;
   determining a region of interest based on the number count of the tags inside the sliding window while it moves over the search area.

3. The method of claim 1 or 2, wherein said method comprises:

   computing a density estimate function to estimate the tag density at the locations inside the search area;
   determining the boundaries of one or more regions of interest based on said density estimate function.

4. The method of claim 3, wherein said density estimate function comprises one or more of the following:

   said density estimate function being a kernel density estimate making use of a kernel function;

a weight function being applied to said density estimate function, whereas the weighing factors applied by said weight function comprises one or more of the following:

putting more emphasis on tags being created by users having a special relationship with the present user;
putting more or less emphasis on the tags depending on the time when they where created.

**5.** The method of claim 2, 3 or 4, further comprising:

determining the boundaries of one or more regions of interest based on the peaks and/or valleys in the computed density estimate.

**6.** The method of one of the preceding claims, further comprising:

displaying said one or more regions of interest in said search area by displaying their boundaries; and
indicating the tags within said region of interest by indicating the location of said tags through some graphic indication.

**7.** The method of claim 6, wherein said graphic indication comprises one or more of the following:

a graphic symbol representing the location of a tag;
a character string representing the location of a tag.

**8.** The method of claim 6 or 7, wherein
said graphic indication further comprises an indication of how many tags are located at the location corresponding to said graphic indication.

**9.** The method of claim 8, wherein said indication of said number of tags comprises one or more of the following:

displaying graphic indications of different sizes to indicate different numbers of tags;
displaying numbers indicating the number of tags.

**10.** The method of one of claims 6 to 9, further comprising:

displaying tags of different types by different graphic indications.

**11.** The method of one of the preceding claims, comprising:

fitting the resulting region of interest determined based on said clustering algorithm by a predefined geometric shape like a circle, a rectangle or a polygon.

**12.** The method of one of the preceding claims, wherein
said tags belong to one or more of categories or types forming a taxonomy of possible tags; and
said tags have been assigned to said locations by different users at different locations.

**13.** The method of one of the preceding claims, further comprising:

determining the geographic location of a user, and
notifying the user if he enters a region of interest determined by a method of one of the preceding claims.

**14.** The method of one of the preceding claims, further comprising:

providing a database where the locations which have been tagged by users are stored together with their corresponding tags;
providing an interface to access said database in order to enable said search for regions of interest; and
providing an interface to enable a user to add further tags to said database.

**15.** An apparatus for automatically identifying one or more regions of interest in a digital map, whereas a plurality of individual locations in said map have been tagged with descriptive tags by different users to semantically identify the meaning of these locations, said apparatus comprising:

defining a search area within the digital map within which the search for regions of interest should be executed;
defining one or more type of tags to which the location tags which are to be found should belong;
applying a clustering algorithm to identify one or more clusters as regions of interest where those locations are grouped or concentrating which have been tagged by different users with tags of the type defined in said defining operation;
displaying the one or more regions of interest found by said clustering algorithm together with an indication of locations having tags of said predetermined type within said digital map.

**16.** The apparatus of claim 15, further comprising:

means for executing a method according to any one of claims 1 to 14.

**17.** A computer program comprising program code which when being executed on a computer causes said computer to carry out a method according to one of claims 1 to 14.

**Amended claims in accordance with Rule 137(2) EPC.**

**1.** A method for automatically identifying one or more regions of interest in a digital map, whereas a plurality of individual locations in said map have been tagged with descriptive tags by different users to semantically identify the meaning of these locations, said method being **characterized by** comprising:

defining a search area (500) within the digital map within which the search for regions of interest should be executed;
defining one or more type of tags to which the location tags which are to be found should belong;
applying a clustering algorithm to identify one or more clusters as regions of interest where those locations are grouped or concentrating which have been tagged by different users with tags of the type defined in said defining operation;
displaying the one or more regions of interest found by said clustering algorithm together with an indication of locations having tags of said predetermined type within said digital map.

**2.** The method of claim 1, wherein said clustering algorithm comprises:

moving a sliding window (510) over the search area (500) and counting the number of tags within the sliding window while it is at a certain location;
determining a region of interest based on the number count of the tags inside the sliding window (510) while it moves over the search area (500).

**3.** The method of claim 1 or 2, wherein said method comprises:

computing a density estimate function to estimate the tag density at the locations inside the search area (500);
determining the boundaries of one or more regions of interest based on said density estimate function.

**4.** The method of claim 3, wherein said density estimate function comprises one or more of the following:

said density estimate function being a kernel density estimate making use of a kernel function;
a weight function being applied to said density estimate function, whereas the weighing factors applied by said weight function comprises one or more of the following:

putting more emphasis on tags being created by users having a special relationship with the present user;
putting more or less emphasis on the tags depending on the time when they where created.

**5.** The method of claim 2, 3 or 4, further comprising:

determining the boundaries of one or more regions of interest based on the peaks and/or valleys in the computed density estimate.

**6.** The method of one of the preceding claims, further comprising:

displaying said one or more regions of interest in said search area (500) by displaying their boundaries; and indicating the tags within said region of interest by indicating the location of said tags through some graphic indication.

**7.** The method of claim 6, wherein said graphic indication comprises one or more of the following:

a graphic symbol representing the location of a tag;
a character string representing the location of a tag.

**8.** The method of claim 6 or 7, wherein
said graphic indication further comprises an indication of how many tags are located at the location corresponding to said graphic indication.

**9.** The method of claim 8, wherein said indication of said number of tags comprises one or more of the following:

displaying graphic indications of different sizes to indicate different numbers of tags;
displaying numbers indicating the number of tags.

**10.** The method of one of claims 6 to 9, further comprising:

displaying tags of different types by different graphic indications.

**11.** The method of one of the preceding claims, comprising:

fitting the resulting region of interest determined based on said clustering algorithm by a predefined geometric shape like a circle, a rectangle or a polygon.

**12.** The method of one of the preceding claims, wherein
said tags belong to one or more of categories or types forming a taxonomy of possible tags; and
said tags have been assigned to said locations by different users at different locations.

**13.** The method of one of the preceding claims, further comprising:

determining the geographic location of a user, and
notifying the user if he enters a region of interest determined by a method of one of the preceding claims.

**14.** The method of one of the preceding claims, further comprising:

providing a database where the locations which have been tagged by users are stored together with their corresponding tags;
providing an interface to access said database in order to enable said search for regions of interest; and
providing an interface to enable a user to add further tags to said database.

**15.** An apparatus for automatically identifying one or more regions of interest in a digital map, whereas a plurality of individual locations in said map have been tagged with descriptive tags by different users to semantically identify the meaning of these locations, said apparatus being
**characterized by** comprising:

means for defining a search area (500) within the digital map within which the search for regions of interest should be executed;
means for defining one or more type of tags to which the location tags which are to be found should belong;
means for applying a clustering algorithm to identify one or more clusters as regions of interest where those locations are grouped or concentrating which have been tagged by different users with tags of the type defined in said defining operation;
means for displaying the one or more regions of interest found by said clustering algorithm together with an indication of locations having tags of said predetermined type within said digital map.

**16.** The apparatus of claim 15, further comprising:

means for executing a method according to any one of claims 24- to 14.

**17.** A computer program comprising program code which when being executed on a computer causes said computer to carry out a method according to one of claims 1 to 14.

Fig. 1

User #1 ... User #i ... User #n

Tag 1, Tag 8

Tag 1, Tag 5, Tag 6

Tag 1, Tag 5

Tag 1, , Tag 5, Tag 7

Tag 1, Tag 2, Tag 3, Tag 4

Latitude

Longitude

Fig. 2

All time most popular tags

amsterdam animal animals april architecture art australia baby barcelona
beach berlin bird birthday black blackandwhite blue boston bridge building bw
california cameraphone camping canada car cat cats chicago
china christmas church city clouds color colorado concert day dc dog dogs england
europe family festival fireworks florida flower flowers food france
friends fun garden geotagged germany girl graduation graffiti green hawaii
holiday home honeymoon house india ireland italy japan july june kids lake
landscape light london losangeles macro march may me mexico moblog
mountains museum music nature new newyork newyorkcity newzealand night
nyc ocean orange oregon paris park party people phone photo pink portrait
red reflection river roadtrip rock rome sanfrancisco school scotland sea seattle sign
sky snow spain spring street summer sun sunset taiwan texas thailand
tokyo toronto travel tree trees trip uk unfound urban usa vacation
vancouver washington water wedding white winter yellow zoo

# Fig. 3

Fig. 4

Fig. 5

Fig. 6

700 — Delimitation of Geographical Area

- (lat = 37.336, long = -121.897, radius = 10.0 km)
- "Munich center"
- ...

710 — Selection of Candidate Tags

- Created last week
- Assigned by at least two users
- Type of Place = 'Park' AND Type of Tag = 'Behaviour'
- ...

720 — Computation of Kernel Density Estimate From Candidate Tags

730 — Set Peak and Valley Thresholds in the Density Estimate

740 — Identification of Clusters

760 — Selection of the Shape of Clusters

750 — Delimitation of Clusters

Pre-processing Clustering Visualization

Fig. 7

$K_\beta(l)$

- Location l
- Tagged place $tp_i$ (i=1..n)
- $d_i = dist(l, tp_i)$

## Fig. 8

EP 1 936 585 A1

Fig. 9

Fig. 10

Fig. 11

Fig. 12

EP 1 936 585 A1

European Patent
Office

**EUROPEAN SEARCH REPORT**

Application Number

EP 06 12 7187

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2005/289469 A1 (CHANDLER ROGER D [US] ET AL) 29 December 2005 (2005-12-29) * paragraph [0006] * ----- | 1,15 | INV. G09B29/00 |
| A | US 2003/088468 A1 (PAUL LAPSTUN [AU] ET AL) 8 May 2003 (2003-05-08) * claim 1 * ----- | 1,15 | |
| A | US 2004/001114 A1 (FUCHS GIL [US] ET AL) 1 January 2004 (2004-01-01) * claim 1 * ----- | 1,15 | |
| A | US 6 580 978 B1 (MCTAMANEY LOUIS S [US]) 17 June 2003 (2003-06-17) * claim 1 * ----- | 1,15 | |
| A | US 2004/261081 A1 (SEN RANJAN K [US]) 23 December 2004 (2004-12-23) * claim 1 * ----- | 4 | |

TECHNICAL FIELDS
SEARCHED      (IPC)

G09B

The present search report has been drawn up for all claims

| Place of search | Date of completion of the search | Examiner |
|---|---|---|
| Munich | 4 June 2007 | Beauce, Gaetan |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

# EP 1 936 585 A1

## ANNEX TO THE EUROPEAN SEARCH REPORT
## ON EUROPEAN PATENT APPLICATION NO.

EP 06 12 7187

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2007

| Patent document cited in search report | | Publication date | Patent family member(s) | | Publication date |
|---|---|---|---|---|---|
| US 2005289469 | A1 | 29-12-2005 | NONE | | |
| US 2003088468 | A1 | 08-05-2003 | NONE | | |
| US 2004001114 | A1 | 01-01-2004 | AU | 2003226196 A1 | 19-01-2004 |
| | | | EP | 1535269 A1 | 01-06-2005 |
| | | | WO | 2004003878 A1 | 08-01-2004 |
| | | | US | 2007038962 A1 | 15-02-2007 |
| US 6580978 | B1 | 17-06-2003 | NONE | | |
| US 2004261081 | A1 | 23-12-2004 | NONE | | |

EPO FORM P0459

For more details about this annex : see Official Journal of the European Patent Office, No. 12/82

30

**EP 1 936 585 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050289469 A

**Non-patent literature cited in the description**

- **S. BÖHM et al.** ContextWatcher - Connecting to Places, People and the World. *The 5th International Semantic Web Conference,* November 2006
- **KOOLWAAIJ et al.** Context Watcher - Sharing context information in everyday life. *The 2nd IASTED International Conference on Web Technologies, Applications, and Services,* July 2006

- **G. BEGELMAN ; P. KELLER ; F. SMADJA.** Automated Tag Clustering: Improving search and exploration in the tag space. *Collaborative Web Tagging Workshop, WWW 2006,* May 2006
- **B. W. SILVERMAN.** Density Estimation for Statistics and Data Analysis. Chapman & Hall / CRC, May 1986